# EUROPEAN PATENT APPLICATION

(11) **EP 3 941 107 A1**
(43) Date of publication of application: **19.01.2022**
(21) Application number: 20806215.8
(22) Date of filing: 08.05.2020
(51) Int. Cl.: H04W 24/10, H04W 48/16, H04W 52/02, H04W 88/06, H04W 76/15

(54) **MEASUREMENT REPORTING METHOD, ELECTRONIC DEVICE, AND STORAGE MEDIUM**

(30) Priority: 16.05.2019 CN 201910405971; 16.09.2019 CN 201910872391
(71) Applicant: GUANGDONG OPPO MOBILE TELECOMMUNICATIONS CORP., LTD., Dongguan, Guangdong 523860 (CN)
(72) Inventor: ZHUANG, Yunteng, Dongguan, Guangdong 523860 (CN); TANG, Kai, Dongguan, Guangdong 523860 (CN); XIA, Yang, Dongguan, Guangdong 523860 (CN); ZHANG, Tao, Dongguan, Guangdong 523860 (CN)
(74) Representative: Taor, Simon Edward William
(86) International application number: PCT/CN2020/089253
(87) International publication number: WO 2020/228616

(57) **Abstract**

Disclosed in the present application is a measurement reporting method. The method comprises: a terminal device receives a measurement request message transmitted by a network device under the condition that the terminal device accesses a first network, the measurement request message being used for requesting the terminal device to measure a second network; the terminal device does not report the measurement result of the second network to the network device, wherein the terminal device supports a dual-connection mode. Also disclosed in the present application are another measurement reporting method, an electronic device, and a storage medium.

## Description

### BACKGROUND OF THE DISCLOSURE

### 1. Field of the Disclosure

The present application relates to wireless communication technologies, and more particularly to a measurement reporting method, an electronic device and a storage medium.

### 2. Description of the Related Art

A new radio (NR) system supports Standalone (SA) framework and Non-Standalone (NSA) framework. A typical NSA framework is Dual Connectivity (DC) framework.

In the DC framework, terminal devices can operate in a dual connectivity mode. In the dual connectivity mode, the terminal establishes connections with two network devices in the NSA framework, respectively. For example, the terminal device establishes connections with a network device in a long-term evolution (LTE) system and a network device in a NR system. In this situation, there are problems of high power consumption and short battery life of the terminal devices.

### SUMMARY

Embodiments of the present application provides a measurement reporting method, an electronic device and a storage medium, capable of saving power consumption of a terminal device and saving battery lifetime of the terminal device.

The technical solutions of the embodiments of the present application may be implemented as follows.

In a first aspect, an embodiment of the present application provides a measurement reporting method, including: receiving, by a terminal device, a measurement request message transmitted by a network device when the terminal device gets access to a first network, the measurement request message configured to request the terminal device to perform a measurement on a second network; and not reporting, by the terminal device, a measurement result of the second network to the network device, wherein the terminal device supports a dual connectivity mode.

In above solution, the not reporting, by the terminal device, the measurement result of the second network to the network device includes:
performing, by the terminal device, the measurement on the second network; and
not reporting, by the terminal device, the measurement result of the second network to the network device.

In above solution, the not reporting, by the terminal device, the measurement result of the second network to the network device includes:
not performing, by the terminal device, the measurement on the second network.

In above solution, the not reporting, by the terminal device, the measurement result of the second network to the network device includes: stopping, by the terminal device, performing the measurement on the second network; and
not reporting, by the terminal device, an obtained measurement result of the second network to the network device.

In above solution, the method further includes: receiving, by the terminal device, a network connection mode configured by the network device, wherein the terminal device can only get access to the first network under the network connection mode.

In above solution, the method further includes: performing, by the terminal device, the measurement on the second network; and
reporting, by the terminal device, the measurement result of the second network device to the network device.

In above solution, the first network is a long-term evolution (LTE) network and the second network is a new radio (NR) network.

In a second aspect, an embodiment of the present application provides a measurement reporting method, including:
transmitting, by a network device, a measurement request message to a terminal device, the measurement request message configured to request the terminal device to perform a measurement on a second network; and
configuring, by the network device, a network connection mode for the terminal device when a measurement result of the second network is not received,
wherein the terminal device can only get access to a first network under the network connection mode, and the terminal device supports a dual connectivity mode.

In above solution, the method further includes:
receiving, by the network device, the measurement result of the second network device reported by the terminal device.

In above solution, the first network is a long-term evolution (LTE) network and the second network is a new radio (NR) network.

In a third aspect, an embodiment of the present application provides a measurement reporting method, including:
receiving, by a third receiving unit of a terminal device, a measurement request message transmitted by a network device when the terminal device gets access to a first network, the measurement request message configured to request the terminal device to perform a measurement on a second network; and
prohibiting, by the third receiving unit, a third processing unit of the terminal device from reporting a measurement result of the second network, wherein the terminal device supports a dual connectivity mode.

In above solution, the prohibiting, by the third receiving unit, the third processing unit of the terminal device from reporting the measurement result of the second network includes:
sending, by the third receiving unit, a first instruction to the third processing unit,
wherein the first instruction is configured to instruct the third processing unit not to report the measurement result of the second network to the network device; or, the first instruction is configured to instruct the third processing unit to send a message to the network device, and the content of the message is null or empty; or, the first instruction is configured to instruct the third processing unit to send a message to the network device, and the content of the message is not associated to the measurement request message.

In above solution, the third processing unit performs the measurement on the second network but not reports an obtained measurement result of the second network to the network device.

In above solution, the third processing unit does not perform the measurement on the second network.

In above solution, the third processing unit stops performing the measurement on the second network and not reports an obtained measurement result of the second network to the network device.

In above solution, the method further includes: shutting down, by the third processing unit, a modulation and demodulation (modem) module of the second network.

In above solution, the third processing unit performs the measurement on the second network; and
the third processing unit reports the measurement result of the second network device to the network device.

In above solution, the first network is a long-term evolution (LTE) network and the second network is a new radio (NR) network.

In a fourth aspect, an embodiment of the present application provides a terminal device, including:
a first receiving unit, configured to receive a measurement request message transmitted by a network device when the terminal device gets access to a first network, the measurement request message configured to request the terminal device to perform a measurement on a second network; and
a first processing unit, configured not to report a measurement result of the second network to the network device,
wherein the terminal device establishes a connection with the network device via a first network, and the terminal device supports a dual connectivity mode.

In above solution, the first processing unit is configured to perform the measurement on the second network but not to report the measurement result of the second network to the network device.

In above solution, the first processing unit is configured not to perform the measurement on the second network.

In above solution, the first processing unit is configured to stop performing the measurement on the second network and not to report an obtained measurement result of the second network to the network device.

In above solution, the first receiving unit is further configured to receive a network connection mode configured by the network device, and the terminal device can only get access to the first network under the network connection mode.

In above solution, the first processing unit is further configured to perform the measurement on the second network and
report the measurement result of the second network device to the network device.

In above solution, the first network is a long-term evolution (LTE) network and the second network is a new radio (NR) network.

In a fifth aspect, an embodiment of the present application provides a network device, including:
a sending unit, configured to transmit a measurement request message to a terminal device, the measurement request message configured to request the terminal device to perform a measurement on a second network; and
a second processing unit, configured to configure a network connection mode for the terminal device when a measurement result of the second network is not received,
wherein the terminal device can only get access to a first network under the network connection mode, and the terminal device supports a dual connectivity mode.

In above solution, the first network is a long-term evolution (LTE) network and the second network is a new radio (NR) network.

In a sixth aspect, an embodiment of the present application further provides a terminal device, including a third receiving unit and a third processing unit, wherein:
the third receiving unit, configured to receive a measurement request message transmitted by a network device when the terminal device gets access to a first network, the measurement request message configured to request the terminal device to perform a measurement on a second network; and
the third receiving unit, configured to prohibit the third processing unit from reporting the measurement result of the second network, wherein the terminal device supports a dual connectivity mode.

In above solution, the third receiving unit is configured to send a first instruction to the third processing unit,
wherein the first instruction is configured to instruct the third processing unit not to report the measurement result of the second network to the network device; or, the first instruction is configured to instruct the third processing unit to send a message to the network device, and the content of the message is null or empty; or, the first instruction is configured to instruct the third processing unit to send a message to the network device, and the content of the message is not associated to the measurement request message.

In above solution, the third processing unit is further configured to perform the measurement on the second network but not to report an obtained measurement result of the second network to the network device.

In above solution, the third processing unit is further configured not to perform the measurement on the second network.

In above solution, the third processing unit is further configured to stop performing the measurement on the second network and not to report an obtained measurement result of the second network to the network device.

In above solution, the third processing unit is further configured to shut down a modulation and demodulation (modem) of the second network.

In above solution, the third processing unit is further configured to perform the measurement on the second network and report the measurement result of the second network device to the network device.

In above solution, the first network is a long-term evolution (LTE) network and the second network is a new radio (NR) network.

In a seventh aspect, an embodiment of the present application provides a terminal device, including a processor and a storage configured to store a computer program executable on the processor, wherein:
the processor, configured to execute, when running the computer program, the steps of the measurement reporting method executed by the foregoing terminal device.

In an eighth aspect, an embodiment of the present application provides a network device, including a processor and a storage configured to store a computer program executable on the processor, wherein:
the processor, configured to execute, when running the computer program, the steps of the measurement reporting method executed by the foregoing network device.

In a ninth aspect, an embodiment of the present application provides a storage medium, storing an executable program, wherein when executed by a processor, the executable program implements the measurement reporting method executed by the foregoing terminal device.

In a tenth aspect, an embodiment of the present application provides a storage medium, storing an executable program, wherein when executed by a processor, the executable program implements the measurement reporting method executed by the foregoing network device.

In the measurement reporting method, the electronic device and the storage medium provided in the embodiments of the present application, the terminal device supporting the dual connectivity mode does not report the measurement result of the second network to the network device after receiving the request for a measurement on the second network transmitted by the network device. By actively prohibiting the terminal device from getting access to a cell corresponding to the second network, it is avoided that the network device configures the dual connectivity mode for the terminal device, thereby saving the power consumption of the terminal device and elongating the lifetime of the terminal device.

### BRIEF DESCRIPTION OF THE DRAWINGS

FIG. 1 is a schematic diagram illustrating the structure of software/hardware of an electronic device according to an embodiment of the present application;
FIG. 2 is a schematic diagram illustrating the architecture of a measurement reporting method provided in an embodiment of the present application;
FIG. 3 is a first schematic diagram illustrating one possible flow of a measurement reporting method provided in an embodiment of the present application.
FIG. 4 is a schematic diagram illustrating the structure of communication modules of a terminal device under a dual connectivity mode according to an embodiment of the present application;
FIG. 5 is a schematic diagram illustrating a measurement reporting process based on LTE to NR B1 event according to an embodiment of the present application;
FIG. 6 is a second schematic diagram illustrating one possible flow of a measurement reporting method provided in an embodiment of the present application.
FIG. 7 is a schematic diagram illustrating smart 5G activation on a terminal device according to an embodiment of the present application;
FIG. 8 is a schematic diagram illustrating one possible structure of a terminal device according to an embodiment of the application;
FIG. 9 is a schematic diagram illustrating one possible structure of a network device according to an embodiment of the application;
FIG. 10 is a schematic diagram illustrating another possible structure of a terminal device according to an embodiment of the application;
FIG. 11 is a schematic diagram illustrating the structure of an electronic device according to an embodiment of the present application.

### DETAILED DESCRIPTION OF THE EMBODIMENTS

The present application will be further described in detail below in conjunction with the drawings and embodiments. It should be understood that the specific embodiments described herein are merely for interpreting the present application and the present application is not limited thereto.

The embodiments of the present application provide a measurement reporting method and an electronic device. As a physical entity implementing the measurement reporting method, the electronic device may be implemented in various ways in practical applications. For example, the electronic device may be a smartphone, a tablet computer, a laptop computer or a wearable device (such as a pair of smartglasses, a smartwatch, etc.). The operating system of the electronic device may be an Android operating system, an IOS operating system or any other operating system (e.g., a mobile version of a Linux system, a Blackberry QNX operating system, etc.) that is developed by a third party and can run on a microcomputer structure (including at least a processor and a memory). The electronic device is illustrated as a smartphone in the drawings of the embodiments of the present application; however, this is not a limitation to the types of electronic devices which the solutions recited in the embodiments of the present application can apply to.

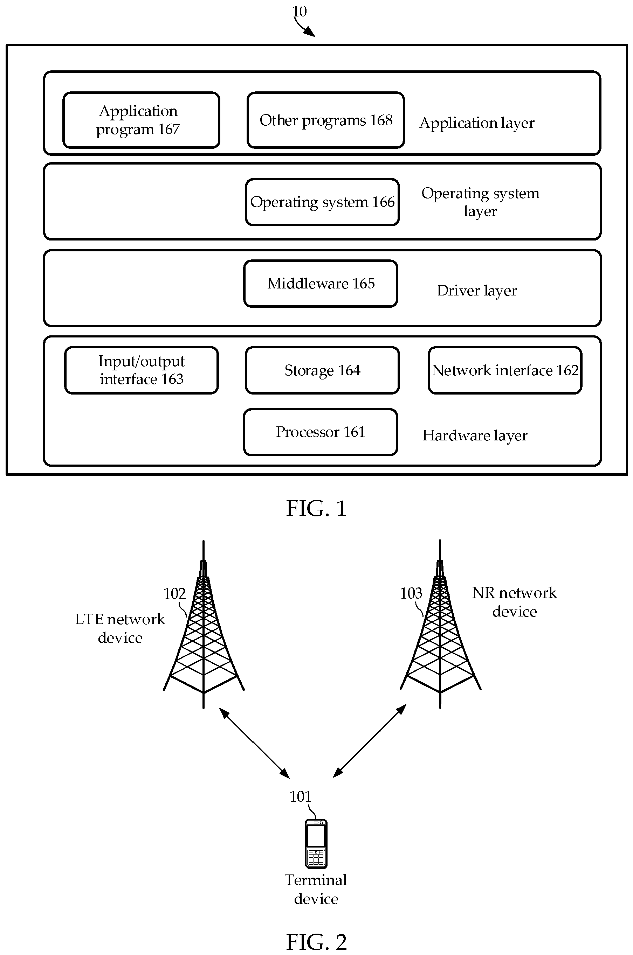

As for the software/hardware structure of the electronic device 10, referring to FIG. 1, it includes a hardware layer, a driver layer, an operating system layer, and an application layer. However, a person of ordinary skill in the art should understand that based on the needs of implementations, the electronic device 10 for information processing may be equipped with more components than those shown in FIG. 1, or some components may be omitted based on the needs of implementations.

The hardware layer of the electronic device 10 includes a processor 161, an input/output interface 163, a storage 164 and a network interface 162. The components can connect and communicate with each other via a system bus.

The processor 161 may be implemented by using a central processing unit (CPU), a microcontroller unit (MCU), an application-specific integrated circuit (ASIC), or a field-programmable gate array (FPGA).

The input/output interface 163 may be implemented by using an input/output device such as a display screen, a touchscreen, or a speaker.

The storage 164 may be implemented by using a non-volatile storage medium such as a flash, a hard disk, or an optical disc, or may be implemented by using a volatile storage medium such as a double data rate (DDR) dynamic cache. The storage 164 stores executable instructions used for performing the afore-mentioned measurement reporting method.

The network interface 162 provides the processor 161 with an ability to access external data based on a transfer control protocol (TCP)/user datagram protocol (UDP) from a storage 164 set at a remote location.

The driver layer includes middleware 165 used by an operating system 166 for identifying the hardware layer and communicating with each component of the hardware layer, and for example, may be a set of drivers for each component of the hardware layer.

The operating system 166 is configured to provide a user-oriented graphics interface and supports a user to control a pointing device via the graphics interface. The embodiments of the present application are not limited to software environment of the afore-mentioned device such as the type or version of the operating system. For example, it may be a Linux operating system, a UNIX operating system, etc.

The application layer includes an application program 167 used to implement the measurement reporting method provided in the embodiments of the present application, and of course, it may also include other programs 168.

The architecture of the measurement reporting method provided in the embodiments of the present application will be briefly described below. In dual connectivity architecture as shown in FIG. 2, a terminal device 101 may establish an air interface connection with a master network device 102 (also called a master node), thereby implementing communicating with the master network device 102; the terminal device 101 may also establish an air interface connection with a secondary network device 103 (also called a secondary node), thereby implementing communicating with the secondary network device 103; and the terminal device 101 may also establish air interface connections with the master network device 102 and the secondary network device 103 at the same time, thereby implementing simultaneously communicating with the master network device 102 and the secondary network device 103.

In dual connectivity mode, the terminal device 101 simultaneously establishes two connections with the master network device 102 and the secondary network device 103, wherein the master network device 102 is mainly responsible for signaling transmission and the secondary network device 103 is responsible for data transmission. The technical solutions in the embodiments of the present application mainly aim at a terminal in the dual connectivity mode.

The types of the master network device 102 and the secondary network device 103 shown in FIG. 2 may be the same or different. In an example, the master network device 102 is a long-term evolution (LTE) network device, and the secondary network device 103 is a new radio (NR) network device. In another example, the master network device 102 is a NR network device, and the secondary network device 103 is also a NR network device. In yet another example, the master network device 102 is a NR network device, and the secondary network device 103 is an LTE network device. The embodiments of the present application are not limited to the types of the master network device 102 and the secondary network device 103.

In an exemplary example, the dual connectivity mode is a E-UTRA-NR dual connectivity (EN-DC) mode or a next generation EN-DC (NGEN-DC) mode. In this case, the master network device is an LTE network device, and the secondary network device is a NR network device. The terminal communicates with both the LTE network device and the NR network device.

In another example, the dual connectivity mode is a NR-evolved UMTS (NR-evolved-UTRA dual connectivity, NE-DC) mode. In this case, the master network device is a NR network device, and the secondary network device is an LTE network device. The terminal communicates with both the LTE network device and the NR network device.

It should be noted that the dual connectivity mode is not limited to the afore-mentioned EN-DC mode and NE-DC mode. The embodiments of the present application are not limited to any specific type of the dual connectivity mode.

In a specific implementation, a deployment of the master network device and the secondary network device may be a cosite deployment (e.g., the NR network device and the LTE network device may be deployed in one physical device), or may be a non-cosite deployment (e.g., the NR network device and the LTE network device may be deployed in different physical devices). The present application is not limited thereto. Here, the LTE network device may also be referred to as an evolved Node B (eNB), and the NR network device may also be referred to as a next generation Node B (gNB). It should be noted that the present application may not be limited to the relationship between the coverage of the master network device and the secondary network device. For example, the coverage of the master network device and the secondary network device may overlap.

The present application may not be limited to any specific type of the terminal device 101, which may be any user equipment that supports the afore-mentioned dual connectivity mode. For example, the user equipment may be a smartphone, a personal computer, a notebook computer, a tablet computer, a portable wearable device, etc.

The technical solutions of the present application and how the technical solutions of the present application solve the above technical problems will be described in detail hereinafter with reference to the embodiments and the accompanying drawings. The following specific embodiments may be combined with each other, and identical or similar concepts or processes may not be further described in some embodiments.

So far, the electronic device involved in the embodiments of the present application has been described according to its functions. Based on the software/hardware structure of the electronic device shown in FIG. 1 and the network architecture shown in FIG. 2, descriptions on network connection solutions provided in the embodiments of the present application will be proceeded.

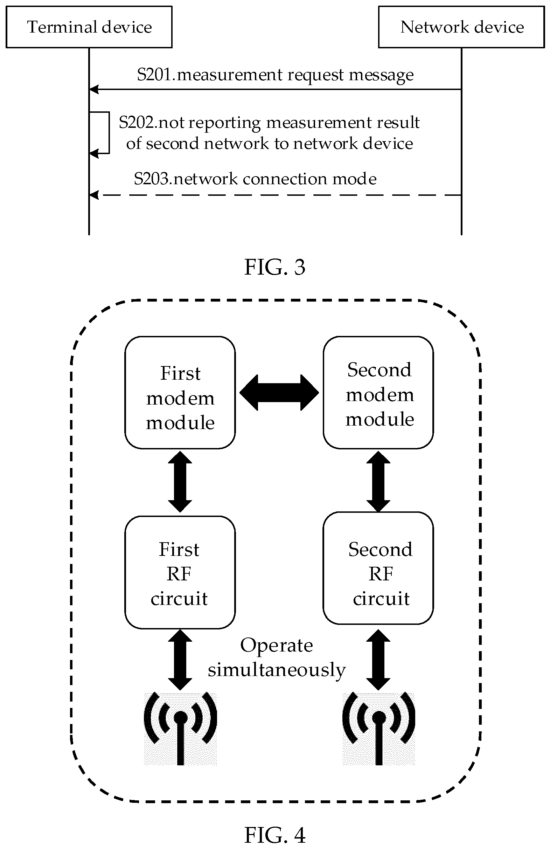

FIG. 3 is a first schematic diagram illustrating one possible flow of a measurement reporting method provided in an embodiment of the present application. Each step will be described below.

In Step S201, when the terminal device gets access to a first network, the terminal device receives a measurement request message transmitted by the network device.

In the embodiment of the present application, the terminal device supports a dual connectivity mode. In the dual connectivity mode, the terminal device communicates with both the first network device and a second network device. In one possible implementation, the first network device is a secondary network device, and the second network device is a master network device, wherein the secondary network device is responsible for data transmission, and the master network device is mainly responsible for signaling transmission. Referring to FIG. 2, a dual connectivity architecture is established between the terminal device, the first network device and the second network device.

In the embodiment of the present application, the dual connectivity mode is, for example, an EN-DC mode, or a NGEN-DC mode, or a NE-DC mode. Taking the EN-DC mode for example, the second network device is a NR network device (i.e., gNB), the first network device is an LTE network device (i.e., eNB), and the terminal device communicates with the NR network device and the LTE network device at the same time. In a single connectivity mode, the terminal device needs to communicate with one network device (e.g., the LTE network device or the NR network device). Compared to the single connectivity mode, the terminal device in the dual connectivity mode consumes more power. To this issue, the embodiment of the present application saves the power consumption of the terminal in the dual connectivity mode by restricting the transmission rate of the terminal.

FIG. 4 is a structural diagram illustrating communication modules of the terminal device in the dual connectivity mode. As shown in FIG. 4, the terminal device needs to be equipped with two sets of communication modules in order to communicate with two network devices simultaneously. The two sets of communication modules correspond to two network devices, respectively. A first modulation and demodulation (modem) module and a first radio frequency (RF) path (including a first RF circuit and a first RF antenna) constructs a first set of communication modules, and the first set of communication modules corresponds to the first network device. A second modem module and a second RF path (including a second RF circuit and a second RF antenna) constructs a second set of communication modules, and the second set of communication modules corresponds to the second network device. In an exemplary example, the second modem is a 5G modem, the first modem is a 4G modem, the second RF circuit is 5G RF, and the first RF circuit is 4G RF. Under the dual connectivity mode, the first communication modules and the second communication modules operate simultaneously.

In an exemplary example, the terminal device first establishes a connection with the first network device and then establishes a connection with the second network device. For example, in a situation that the terminal device is connected to the first network device, the terminal device receives a control instruction transmitted by a second network device, and the control instruction is configured to trigger a communication function corresponding to the second network device. In response to the control instruction, the terminal device establishes a connection with the second network device.

In the embodiment of the present application, the measurement request message is configured to request the terminal device to perform a measurement on a second network.

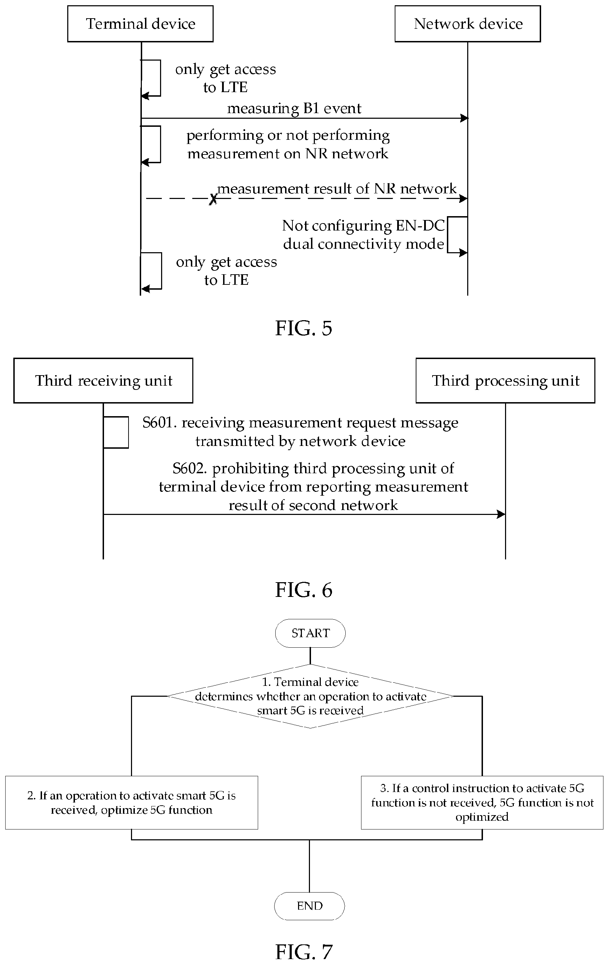

In a specific implementation, the measurement request message may be implemented by LTE to NR B1 event triggered from the network device to the terminal device. The measurement request message is configured to request the terminal device to perform a measurement on a second cell corresponding to the second network. As shown in FIG. 5, it is based on a measurement reporting process for the LTE to NR B1 event. Although the terminal device supports the dual connectivity mode, in a situation that the terminal device only gets access to the LTE network, the network device configures the terminal device to measure the B1 event and the terminal device performs or does not perform a measurement on the NR network. However, the terminal device does not report a measurement result of the NR network to the network device. In a situation that the network device does not receive any measurement result of the NR network, the network device does not configure the terminal device with an EN-DC dual connectivity mode, and the terminal device still only gets access to the LTE network.

In Step S202, the terminal device does not report the measurement result of the second network to the network device.

In some embodiments, the situation that the terminal device does not report the measurement result of the second network to the network device includes the followings. After receiving the measurement request message transmitted by the network device, the terminal device performs a measurement on the second network to obtain the measurement result; however, the terminal device does not report the measurement result to the network device.

In other embodiments, the situation that the terminal device does not report the measurement result of the second network to the network device includes the followings. The terminal device never performs a measurement on the second network. After receiving the measurement request message transmitted by the network device, the terminal device does not perform a measurement on the second network.

In other embodiments, the situation that the terminal device does not report the measurement result of the second network to the network device includes the followings. The terminal device is performing a measurement on the second network. After receiving the measurement request message transmitted by the network device, the terminal device suspends the measurement on the second network, and the obtained measurement result of the second cell is not reported to the network device.

In a possible embodiment of the present application, after Step S202 is executed, the method further includes:

In Step S203, the terminal device gets access to a network based on a network connection mode configured by the network device.

In the embodiment of the present application, since the terminal device does not report the measurement result of the second network to the network device, the network connection mode configured for the terminal device by the network device is a single connection mode. In such a network connection mode, the terminal device can only get access to the first network. That is, the terminal device switches from the dual connectivity mode to the single connectivity mode. In a scenario where the terminal device switches from the dual connectivity mode to the single connectivity mode, the network device is a master network device, and the master network device transmits a message to a secondary network device in the dual connectivity mode for indicating a disconnection between the secondary network device and the terminal device, that is, the secondary network device no longer performs data transmission to or from the terminal device. In a scenario where the terminal device switches from the dual connectivity mode to the single connectivity mode, the network device is a master network device, and the terminal device and a secondary network device is disconnected before the terminal device receives a single connectivity configuration from the network device. The secondary network device transmits a message to the master network device, and the message is used to notify the master network device to perform data transmission and signalling transmission between the network device and the terminal device.

In some embodiments, if the terminal device expects to return to the dual connectivity mode, the terminal device needs to report a measurement report of the second network to the network device. After the network device receives the measurement report of the second network reported by the terminal device, the network device configures the terminal device with the dual connectivity mode, for example, the network device configures the EN-DC dual connectivity mode for the terminal device. When the network device configures the dual connectivity mode for the terminal device, the network device can be considered as a master network device. The master network device still needs to transmit a message to the secondary network device to indicate to the secondary network device to establish a connection with the terminal device and indicate data transmission performed between secondary network device and terminal device. In this scenario, signalling transmission is performed between the master network device and the terminal device.

FIG. 6 is a second schematic diagram illustrating one possible processing flow of a measurement reporting method in an embodiment of the present application. The flow includes the following steps. The second schematic diagram of the optional processing flow of the measurement reporting method of the embodiment of the present application, as shown in FIG. 6, includes the following steps:

In Step S601, in a situation that the terminal device gets access to the first network, a third receiving unit of the terminal device receives the measurement request message transmitted by the network device.

The measurement request message is used to request the terminal device to perform a measurement on the second network.

In the embodiment of the present application, the terminal device supports a dual connectivity mode. In the dual connectivity mode, the terminal device communicates with both the first network device and a second network device. In one possible implementation, the first network device is a secondary network device, and the second network device is a master network device, wherein the secondary network device is responsible for data transmission, and the master network device is mainly responsible for signaling transmission. Referring to FIG. 2, a dual connectivity architecture is established between the terminal device, the first network device and the second network device.

In the embodiment of the present application, the dual connectivity mode is, for example, an EN-DC mode, or a NGEN-DC mode, or a NE-DC mode. Taking the EN-DC mode for example, the second network device is a NR network device (i.e., gNB), the first network device is an LTE network device (i.e., eNB), and the terminal device communicates with the NR network device and the LTE network device at the same time. In a single connectivity mode, the terminal device needs to communicate with one network device (e.g., the LTE network device or the NR network device). Compared to the single connectivity mode, the terminal device in the dual connectivity mode consumes more power. To this issue, the embodiment of the present application saves the power consumption of the terminal in the dual connectivity mode by restricting the transmission rate of the terminal.

FIG. 4 is a structural diagram illustrating communication modules of the terminal device in the dual connectivity mode. As shown in FIG. 4, the terminal device needs to be equipped with two sets of communication modules in order to communicate with two network devices simultaneously. The two sets of communication modules correspond to two network devices, respectively. A first modulation and demodulation (modem) module and a first radio frequency (RF) path (including a first RF circuit and a first RF antenna) constructs a first set of communication modules, and the first set of communication modules corresponds to the first network device. A second modem and a second RF path (including a second RF circuit and a second RF antenna) constructs a second set of communication modules, and the second set of communication modules corresponds to the second network device. In an exemplary example, the second modem is a 5G modem, the first modem is a 4G modem, the second RF circuit is 5G RF, and the first RF circuit is 4G RF. Under the dual connectivity mode, the first communication modules and the second communication modules operate simultaneously.

In an exemplary example, the terminal device first establishes a connection with the first network device and then establishes a connection with the second network device. For example, in a situation that the terminal device is connected to the first network device, the terminal device receives a control instruction transmitted by a second network device, and the control instruction is configured to trigger a communication function corresponding to the second network device. In response to the control instruction, the terminal device establishes a connection with the second network device.

In the embodiment of the present application, the measurement request message is configured to request the terminal device to perform a measurement on a second network.

In a specific implementation, the measurement request message may be implemented by LTE to NR B1 event triggered from the network device to the terminal device. The measurement request message is configured to request the terminal device to perform a measurement on a second cell corresponding to the second network. As shown in FIG. 5, it is based on a measurement reporting process for the LTE to NR B1 event. Although the terminal device supports the dual connectivity mode, in a situation that the terminal device only gets access to the LTE network, the network device configures the terminal device to measure the B1 event and the terminal device performs or does not perform a measurement on the NR network. However, the terminal device does not report a measurement result of the NR network to the network device. In a situation that the network device does not receive any measurement result of the NR network, the network device does not configure the terminal device with an EN-DC dual connectivity mode, and the terminal device still only gets access to the LTE network.

In Step S602: the third receiving unit prohibits the third processing unit of the terminal device from reporting the measurement result of the second network.

In some embodiments, the third receiving unit sends a first instruction to the third processing unit.

The first instruction is used to instruct the third processing unit not to report the measurement result of the second network to the network device, that is, the third receiving unit instructs the third processing unit not to send any message to the network device.

Alternatively, the first instruction is used to instruct the third processing unit to send a message to the network device, and the content of the message is null or empty.

Alternatively, the first instruction is used to instruct the third processing unit to send a message to the network device, and the content of the message is not associated to the measurement request message, that is, the message sent to the network device by a third sending unit is not a response message based on a reconfiguration message sent to the terminal device by the network device.

Correspondingly, after receiving the first, the third processing unit performs a measurement on the second network but does not report an obtained measurement result of the second network to the network device; or, the third processing unit does not perform a measurement on the second network; or, the third processing unit stops performing the measurement on the second network and does not report an obtained measurement result of the second network to the network device.

In some embodiments, the method further includes:

In Step S603, the third processing unit shuts down the modem module of the second network.

In some embodiments, when the third processing unit prohibits the third sending unit of the terminal device from sending a response based on the reconfiguration message, the third processing unit actively shuts down the modem module of the second network.

In other embodiments, when the third processing unit receives a message transmitted by the network device and the message configures the terminal device to be in the single connectivity mode, the third processing unit shuts down the modem module of the second network and the terminal device cannot establish a connection with the second network.

It should be noted that in a possible embodiment of the present application the first network is an LTE network and the second network is a NR network. The terminal device establishes a connection with the network device via the first network, which means the terminal device and the network device communicate with each other within the first network.

In the embodiment of the present application, after a connection is established between the terminal device and the second network device corresponding to the second network, the terminal device can communicate with the second network device. It should be noted that the connection described in the embodiments of the present application refers to "get access to". After the terminal device enables communication with the second network device, it needs to adjust various parameters of the terminal device based on actual situation to achieve the best compromise between performance and power consumption such that a user can have a better experience. FIG. 7 is a schematic diagram illustrating smart 5G activation for a terminal device. Referring to FIG. 7, taking the communication function corresponding to the second network device as a 5G function for example, activating the smart 5G means optimizing the 5G functions. Specifically, when using the 5G function, the terminal device can adjust various parameters (such as transmission rate) of the terminal device based on the actual situation. As shown in FIG. 7, the smart 5G activation on the terminal device includes the following processes:

1. The terminal device determines whether an operation to activate the smart 5G is received or not.

Here, the terminal displays a user interface, and the user interface includes an option to switch on the smart 5G. The user can trigger the operation to select the option corresponding to the smart 5G, thereby activating the smart 5G. Here, the user operation may be a touch operation, a key pressing operation, a voice operation, a gesture operation, or the like.

2. If an operation to activate the smart 5G is received, optimize the 5G function.

Here, the optimization of the 5G function at least includes the followings. After receiving a request for a measurement on the second network, transmitted by the network device, the terminal device does not report a measurement result of the second network to the network device, thereby preventing the network device from configuring the dual connectivity mode for the terminal device such that power consumption of terminal device is saved.

3. If a control instruction to activate the 5G function is not received, the 5G function is not optimized.

A first possible application scenario of the measurement reporting method provided in an embodiment of the present application is described below. The terminal device detects its own data download rate. When the data download rate is less than a predetermined threshold, the terminal device enables a restriction on the communication function corresponding to the second network device. In a situation that the communication function corresponding to the second network device is restricted, the terminal device does not report the measurement result of the second network to the network device after receiving the request for a measurement on the second network transmitted by the network device. By actively prohibiting the terminal device from getting access to a cell corresponding to the second network, it is avoided that the network device configures the dual connectivity mode for the terminal device, thereby saving the power consumption of the terminal device. Here, the threshold may be flexibly set based to actual needs, for example, it is set as 8Mbps.

A second possible application scenario of the measurement reporting method provided in an embodiment of the present application is described below. The terminal device detects its own power consumption rate. When the power consumption rate is greater than a predetermined threshold, the terminal device enables a restriction on the communication function corresponding to the second network device. In a situation that the communication function corresponding to the second network device is restricted, the terminal device does not report the measurement result of the second network to the network device after receiving the request for a measurement on the second network transmitted by the network device. By actively prohibiting the terminal device from getting access to a cell corresponding to the second network, it is avoided that the network device configures the dual connectivity mode for the terminal device, thereby saving the power consumption of the terminal device. Here, the threshold may be flexibly set based on actual needs. The threshold is 10% of the power consumption within 5 minutes. If the terminal device consumes more than 10% of the power consumption within 5 minutes, the communication function corresponding to the second network device is restricted.

A third possible application scenario of the measurement reporting method provided in an embodiment of the present application is described below. When the terminal device detects that a running application belongs to a predetermined application blacklist, the terminal device enables a restriction on the communication function corresponding to the second network device. In a situation that the communication function corresponding to the second network device is restricted, the terminal device does not report the measurement result of the second network to the network device after receiving the request for a measurement on the second network transmitted by the network device. By actively prohibiting the terminal device from getting access to a cell corresponding to the second network, it is avoided that the network device configures the dual connectivity mode for the terminal device, thereby saving the power consumption of the terminal device. For example, if the terminal device detects that Application A and Application B are currently running and Application B belongs to the predetermined application blacklist, the communication function corresponding to the second network device is restricted.

A fourth possible application scenario of the measurement reporting method provided in an embodiment of the present application is described below. When the terminal device detects that a Volte call is processing, the terminal device enables a restriction on the communication function corresponding to the second network device. In a situation that the communication function corresponding to the second network device is restricted, the terminal device does not report the measurement result of the second network to the network device after receiving the request for a measurement on the second network transmitted by the network device. By actively prohibiting the terminal device from getting access to a cell corresponding to the second network, it is avoided that the network device configures the dual connectivity mode for the terminal device, thereby saving the power consumption of the terminal device.

A fifth possible application scenario of the measurement reporting method provided in an embodiment of the present application is described below. When the terminal device is in an off-screen state, the terminal device enables a restriction on the communication function corresponding to the second network device. In a situation that the communication function corresponding to the second network device is restricted, the terminal device does not report the measurement result of the second network to the network device after receiving the request for a measurement on the second network transmitted by the network device. By actively prohibiting the terminal device from getting access to a cell corresponding to the second network, it is avoided that the network device configures the dual connectivity mode for the terminal device, thereby saving the power consumption of the terminal device. The off-screen state indicates that the display screen of the terminal device is in a non-display state.

A sixth possible application scenario of the measurement reporting method provided in an embodiment of the present application is described below. When the signal received by the terminal device under the second network is weaker than that under the first network and the intensity of the signal received by the terminal device under the second network is lower than a predetermined threshold, the terminal device enables a restriction on the communication function corresponding to the second network device. In a situation that the communication function corresponding to the second network device is restricted, the terminal device does not report the measurement result of the second network to the network device after receiving the request for a measurement on the second network transmitted by the network device. By actively prohibiting the terminal device from getting access to a cell corresponding to the second network, it is avoided that the network device configures the dual connectivity mode for the terminal device, thereby saving the power consumption of the terminal device. The threshold may be flexibly set based on actual application scenarios.

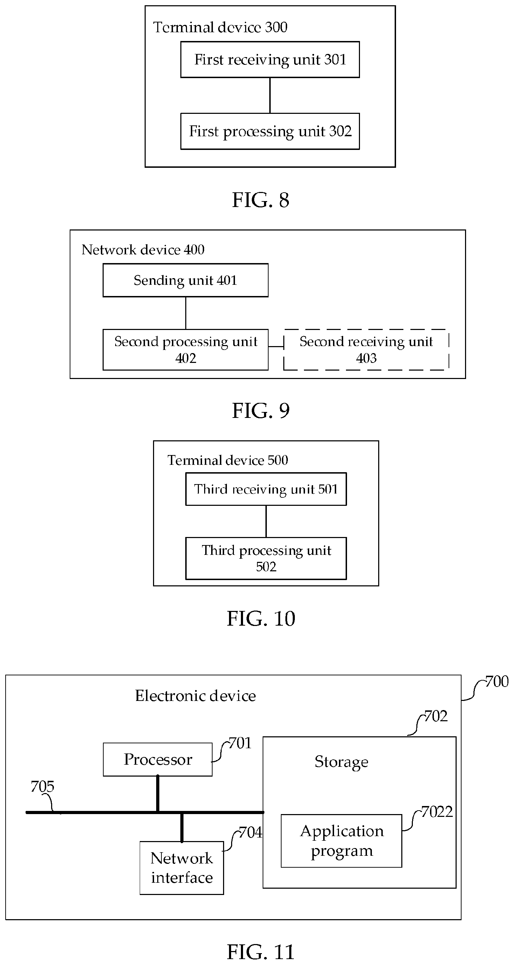

Based on the measurement reporting methods provided in the foregoing embodiments, an embodiment of the present application further provides a terminal device. As shown in FIG. 8, a schematic diagram illustrating the structure of the terminal device 300 is provided, which includes:
a first receiving unit 301, configured to receive a measurement request message transmitted by the network device when the terminal device gets access to the first network, the measurement request message configured to request the terminal device to perform a measurement on the second network;
a first processing unit 302, configured not to report a measurement result of the second network to the network device;
the terminal device establishes a connection with the network device via the first network.

In one implementation, the first processing unit 302 is configured to perform the measurement on the second network but not to report the measurement result of the second network to the network device.

In one implementation, the first processing unit 302 is configured not to perform the measurement on the second network.

In one implementation, the first processing unit 302 is configured to stop performing the measurement on the second network and not to report an obtained measurement result of the second network to the network device.

In one implementation, the first receiving unit 301 is further configured to receive a network connection mode configured by the network device, and the terminal device can only get access to the first network under the network connection mode.

In one implementation, the first processing unit 302 is further configured to perform the measurement on the second network and report the measurement result of the second network device to the network device.

In one implementation, the first network is an LTE network and the second network is a NR network.

Based on the measurement reporting methods provided in the foregoing embodiments, an embodiment of the present application further provides a network device. As shown in FIG. 9, a schematic diagram illustrating the structure of the network device 400 is provided, which includes:
a sending unit 401, configured to transmit a measurement request message to the terminal device, the measurement request message configured to request the terminal device to perform a measurement on the second network;
a second processing unit 402, configured to configure a network connection mode for the terminal device when a measurement result of the second network is not received;
the terminal device can only get access to the first network under the network connection mode.

In one implementation, the network device 400 further includes:
a second receiving unit 403, configured to receive the measurement result of the second network device reported by the terminal device.

In one implementation, the first network is an LTE network and the second network is a NR network.

Based on the measurement reporting methods provided in the foregoing embodiments, an embodiment of the present application further provides a terminal device. As shown in FIG. 10, a schematic diagram illustrating the structure of the terminal device 500 is provided, which includes:
a third receiving unit 501 and a third processing unit 502;
the third receiving unit 501, configured to receive a measurement request message transmitted by the network device when the terminal device gets access to the first network, the measurement request message configured to request the terminal device to perform a measurement on the second network;
the third receiving unit 502, configured to prohibit the third processing unit from reporting the measurement result of the second network, wherein the terminal device supports a dual connectivity mode.

In one implementation, the third receiving unit 501 is configured to send a first instruction to the third processing unit;
the first instruction is configured to instruct the third processing unit 502 not to report the measurement result of the second network to the network device; or, the first instruction is configured to instruct the third processing unit 502 to send a message to the network device, and the content of the message is null or empty; or, the first instruction is configured to instruct the third processing unit 502 to send a message to the network device, and the content of the message is not associated to the measurement request message.

In one implementation, the third processing unit 502 is further configured to perform a measurement on the second network but not to report an obtained measurement result of the second network to the network device.

In one implementation, the third processing unit 502 is further configured not to perform the measurement on the second network.

In one implementation, the third processing unit 502 is further configured to stop performing the measurement on the second network and not to report the obtained measurement result of the second network to the network device.

In one implementation, the third processing unit 502 is further configured to shut down a modem module of the second network.

In one implementation, the third processing unit 502 is further configured to perform the measurement on the second network and report the measurement result of the second network device to the network device.

In one implementation, the first network is an LTE network and the second network is a NR network.

FIG. 11 is a structural diagram illustrating hardware of an electronic device (e.g., a terminal device and a network device) according to an embodiment of the present application. The electronic device 700 includes at least one processor 701, a storage 702 and at least one network interface 704. Various components in the electronic device 700 are coupled together via a bus system 705. It may be understood that the bus system 705 is configured to implement connections and communications between these components. In addition to a data bus, the bus system 705 further includes a power bus, a control bus and a state signal bus. However, for the sake of clarity, various buses are all marked as the bus system 705 in FIG. 11.

It may be understood that the storage 702 may be a volatile storage or a non-volatile storage, or may include both the volatile storage and the non-volatile storage. The non-volatile storage may be a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk or a compact disc read-only memory (CD-ROM). The magnetic surface memory may be a magnetic disk memory or a magnetic tape memory. The volatile storage may be a random access memory (RAM), which serves as an external cache. By way of an illustrative description rather than a limited description, many forms of RAMs may be used, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a syncLink dynamic random access memory (SLDRAM) and a direct Rambus random access memory (DRRAM). The storage 702 described in the embodiments of the present application is intended to include, but is not limited to, these memories and any other suitable type of memory.

The storage 702 in this embodiment of the present application is configured to store various types of data to support operations of the electronic device 700. Examples of the various types of data include any computer program, such as an application program 7022, operated on the electronic device 700. Programs for implementing the methods in the embodiments of the present application may be included in the application program 7022.

The methods disclosed by the embodiments of the present application may be applied to the processor 701 or may be performed by the processor 701. The processor 701 may be an integrated circuit chip with a signal processing capability. In the implementation process, various steps of the preceding methods may be performed by an integrated logic circuit of hardware or a software instruction in the processor 701. The preceding processor 701 may be a general-purpose processor, a digital signal processor (DSP), or another programmable logic device, another discrete gate or transistor logic device, another discrete hardware component or the like. The processor 701 may implement or execute various methods, steps and logic block diagrams disclosed by the embodiments of the present application. The general-purpose processor may be a microprocessor or any conventional processor. The steps of the methods disclosed by the embodiments of the present application may be performed by a hardware decoding processor, or may be performed by a combination of hardware and software modules in the decoding processor. The software module may be located in a storage medium and the storage medium is located in the storage 702. The processor 701 reads information in the storage 702 and implements the steps of the preceding methods in combination with hardware of the processor 701.

In an exemplary embodiment, the electronic device 700 may be performed by one or more application specific integrated circuits (ASICs), DSPs, programmable logic devices (PLDs), complex programmable logic devices (CPLDs), field-programmable gate arrays (FPGAs), general-purpose processors, controllers, micro controller units (MCUs), micro processor units (MPUs) or other electronic elements to perform the preceding methods.

An embodiment of the present application further provides a storage medium for storing a computer program.

Optionally, the storage medium may be applied to the terminal device in the embodiment of the present application, and the computer program causes a computer to execute corresponding processes in each method executed by the terminal device of the embodiment of the present application. For simplicity, details of these are not described herein again.

Optionally, the storage medium may be applied to the network device in the embodiment of the present application, and the computer program causes a computer to execute corresponding processes in each method executed by the network device of the embodiment of the present application. For simplicity, details of these are not described herein again.

The present application is described with reference to the flowcharts and/or block diagrams of the method, the device (system), and the computer program product based on the implementations of the present application. It is worthwhile to note that computer program instructions can be used to implement each process and/or each block in the flowcharts and/or the block diagrams and a combination of processes and/or blocks in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions can be stored in a computer-readable storage that can instruct the computer or the another programmable data processing device to work in a specific way, so that the instructions stored in the computer-readable storage generate an artifact that includes an instruction apparatus. The instruction apparatus implements a specific function in one or more processes in the flowcharts and/or in one or more blocks in the block diagrams.

These computer program instructions can be loaded onto the computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

The foregoing description is only a specific implementation manner of the present application. The protection scope of the present application, however, is not limited thereto. Various modifications or replacements may be readily conceivable to any person skilled in the art within the technical scope disclosed in the present application, and such modifications or replacements shall fall within the protection scope of the present application. Therefore, the protection scope of the present application shall be subject to the protection scope of the claims.

## Claims

1. A measurement reporting method, comprising:
receiving, by a terminal device, a measurement request message transmitted by a network device when the terminal device gets access to a first network, the measurement request message configured to request the terminal device to perform a measurement on a second network; and
not reporting, by the terminal device, a measurement result of the second network to the network device, wherein the terminal device supports a dual connectivity mode.

2. The method of claim 1, wherein the not reporting, by the terminal device, the measurement result of the second network to the network device comprises:
performing, by the terminal device, the measurement on the second network; and
not reporting, by the terminal device, the measurement result of the second network to the network device.

3. The method of claim 1, wherein the not reporting, by the terminal device, the measurement result of the second network to the network device comprises:
not performing, by the terminal device, the measurement on the second network.

4. The method of claim 1, wherein the not reporting, by the terminal device, the measurement result of the second network to the network device comprises:
stopping, by the terminal device, performing the measurement on the second network; and
not reporting, by the terminal device, an obtained measurement result of the second network to the network device.

5. The method of claim 1, further comprising:
receiving, by the terminal device, a network connection mode configured by the network device, wherein the terminal device can only get access to the first network under the network connection mode.

6. The method of claim 1, further comprising:
performing, by the terminal device, the measurement on the second network; and
reporting, by the terminal device, the measurement result of the second network device to the network device.

7. The method of any of claims 1 to 6, wherein the first network is a long-term evolution (LTE) network and the second network is a new radio (NR) network.

8. A measurement reporting method, comprising:
transmitting, by a network device, a measurement request message to a terminal device, the measurement request message configured to request the terminal device to perform a measurement on a second network; and
configuring, by the network device, a network connection mode for the terminal device when a measurement result of the second network is not received,
wherein the terminal device can only get access to a first network under the network connection mode, and the terminal device supports a dual connectivity mode.

9. The method of claim 8, further comprising:
receiving, by the network device, the measurement result of the second network device reported by the terminal device.

10. The method of claim 8 or 9, wherein the first network is a long-term evolution (LTE) network and the second network is a new radio (NR) network.

11. A measurement reporting method, comprising:
receiving, by a third receiving unit of a terminal device, a measurement request message transmitted by a network device when the terminal device gets access to a first network, the measurement request message configured to request the terminal device to perform a measurement on a second network; and
prohibiting, by the third receiving unit, a third processing unit of the terminal device from reporting a measurement result of the second network, wherein the terminal device supports a dual connectivity mode.

12. The method of claim 11, wherein the prohibiting, by the third receiving unit, the third processing unit of the terminal device from reporting the measurement result of the second network comprises:
sending, by the third receiving unit, a first instruction to the third processing unit,
wherein the first instruction is configured to instruct the third processing unit not to report the measurement result of the second network to the network device; or, the first instruction is configured to instruct the third processing unit to send a message to the network device, and the content of the message is null or empty; or, the first instruction is configured to instruct the third processing unit to send a message to the network device, and the content of the message is not associated to the measurement request message.

13. The method of claim 11, further comprising:
preforming, by the third processing unit, the measurement on the second network but not reporting an obtained measurement result of the second network to the network device.

14. The method of claim 11, further comprising:
not performing, by the third processing unit, the measurement on the second network.

15. The method of claim 11, further comprising:
stopping, by the third processing unit, performing the measurement on the second network and not reporting an obtained measurement result of the second network to the network device.

16. The method of claim 11, further comprising:
shutting down, by the third processing unit, a modulation and demodulation (modem) module of the second network.

17. The method of claim 11, further comprising:
performing, by the third processing unit, the measurement on the second network; and
reporting, by the third processing unit, the measurement result of the second network device to the network device.

18. The method of any of claims 11 to 17, wherein the first network is a long-term evolution (LTE) network and the second network is a new radio (NR) network.

19. A terminal device, comprising:
a first receiving unit, configured to receive a measurement request message transmitted by a network device when the terminal device gets access to a first network, the measurement request message configured to request the terminal device to perform a measurement on a second network; and
a first processing unit, configured not to report a measurement result of the second network to the network device,
wherein the terminal device establishes a connection with the network device via a first network, and the terminal device supports a second network connection mode.

20. The terminal device of claim 19, wherein the first processing unit is the measurement result of the network.

21. The terminal device of claim 19, wherein the first processing unit is configured not to perform the measurement on the second network.

22. The terminal device of claim 19, wherein the first processing unit is configured to stop performing the measurement on the second network and
not to report an obtained measurement result of the second network to the network device.

23. The terminal device of claim 19, wherein the first receiving unit is further configured to receive a network connection mode configured by the network device, and the terminal device can only get access to the first network under the network connection mode.

24. The terminal device of claim 19, wherein the first processing unit is further configured to perform the measurement on the second network and
report the measurement result of the second network device to the network device.

25. The terminal device of any of claims 19 to 24, wherein the first network is a long-term evolution (LTE) network and the second network is a new radio (NR) network.

26. A network device, comprising:
a sending unit, configured to transmit a measurement request message to a terminal device, the measurement request message configured to request the terminal device to perform a measurement on a second network; and
a second processing unit, configured to configure a network connection mode for the terminal device when a measurement result of the second network is not received,
wherein the terminal device can only get access to a first network under the network connection mode, and the terminal device supports a second network connection mode.

27. The network device of claim 26, further comprising:
a second receiving unit, configured to receive the measurement result of the second network device reported by the terminal device.

28. The network device of claim 26 or 27, wherein the first network is a long-term evolution (LTE) network and the second network is a new radio (NR) network.

29. A terminal device, comprising a third receiving unit and a third processing unit, wherein:
the third receiving unit, configured to receive a measurement request message transmitted by a network device when the terminal device gets access to a first network, the measurement request message configured to request the terminal device to perform a measurement on a second network; and
the third receiving unit, configured to prohibit the third processing unit from reporting the measurement result of the second network, wherein the terminal device supports a dual connectivity mode.

30. The terminal device of claim 29, wherein the third receiving unit is configured to send a first instruction to the third processing unit,
wherein the first instruction is configured to instruct the third processing unit not to report the measurement result of the second network to the network device; or, the first instruction is configured to instruct the third processing unit to send a message to the network device, and the content of the message is null or empty; or, the first instruction is configured to instruct the third processing unit to send a message to the network device, and the content of the message is not associated to the measurement request message.

31. The terminal device of claim 29, wherein the third processing unit is further configured to perform the measurement on the second network but not to report an obtained measurement result of the second network to the network device.

32. The terminal device of claim 29, wherein the third processing unit is further configured not to perform the measurement on the second network.

33. The terminal device of claim 29, wherein the third processing unit is further configured to stop performing the measurement on the second network and not to report an obtained measurement result of the second network to the network device.

34. The terminal device of claim 29, wherein the third processing unit is further configured to shut down a modulation and demodulation (modem) of the second network.

35. The terminal device of claim 29, wherein the third processing unit is further configured to perform the measurement on the second network and report the measurement result of the second network device to the network device.

36. The terminal device of any of claims 29 to 35, wherein the first network is a long-term evolution (LTE) network and the second network is a new radio (NR) network.

37. A terminal device, comprising a processor and a storage configured to store a computer program executable on the processor, wherein:
the processor, configured to execute, when running the computer program, the steps of the measurement reporting method according to any of claims 1 to 7.

38. A network device, comprising a processor and a storage configured to store a computer program executable on the processor, wherein:
the processor, configured to execute, when running the computer program, the steps of the measurement reporting method according to any of claims 8 to 10.

39. A terminal device, comprising a processor and a storage configured to store a computer program executable on the processor, wherein:
the processor, configured to execute, when running the computer program, the steps of the measurement reporting method according to any of claims 11 to 18.

40. A storage medium, storing an executable program, wherein when executed by a processor, the executable program implements the measurement reporting method according to any of claims 1 to 7.

41. A storage medium, storing an executable program, wherein when executed by a processor, the executable program implements the measurement reporting method according to any of claims 8 to 10.

42. A storage medium, storing an executable program, wherein when executed by a processor, the executable program implements the measurement reporting method according to any of claims 11 to 18.
